# EUROPÄISCHE PATENTSCHRIFT

(11) **EP 4 029 763 B1**
(45) Veröffentlichungstag und Bekanntmachung des Hinweises auf die Patenterteilung: **18.10.2023**
(21) Anmeldenummer: 21213853.1
(22) Anmeldetag: 10.12.2021
(51) Int. Cl.: B62D 15/02

(54) **VERFAHREN ZUM BETREIBEN EINES KRAFTFAHRZEUGS SOWIE KRAFTFAHRZEUG**
MOTOR VEHICLE AND METHOD FOR OPERATING A MOTOR VEHICLE
PROCÉDÉ DE FONCTIONNEMENT D'UN VÉHICULE AUTOMOBILE, AINSI QUE VÉHICULE AUTOMOBILE

(30) Priorität: 15.01.2021 DE 102021200373
(43) Veröffentlichungstag der Anmeldung: 20.07.2022
(73) Patentinhaber: Volkswagen Aktiengesellschaft, 38440 Wolfsburg (DE)
(72) Erfinder: Brandt, Niklas, 31552 Rodenberg (DE); Wehmann, Yannick, 38102 Braunschweig (DE); Kiefer, Christian, 38114 Braunschweig (DE)

(56) Entgegenhaltungen:
- DE-A1-102013 212 318
- DE-A1-102019 003 202
- DE-A1-102019 008 864

## Beschreibung

Die vorliegende Erfindung betrifft ein Verfahren zum Betreiben eines Kraftfahrzeugs sowie ein Kraftfahrzeug.

Aus der US 10 661 786 B2 ist bereits eine autonome Einparkhilfevorrichtung mit einem Umgebungsinformationsdetektor bekannt, welcher dazu eingerichtet ist, Umgebungsinformationen eines Fahrzeugs zu erfassen. Weiterhin umfasst die Einparkhilfevorrichtung einen Prozessor, der dazu eingerichtet ist, unter Verwendung des Umgebungsinformationsdetektors zu erfassen, ob eine Änderung in einer Parkumgebung auftritt, nachdem das Fahrzeug in einer Zielparklücke geparkt ist. Weiterhin ist der Prozessor dazu eingerichtet, zu bestimmen, ob eine Neuausrichtung des Fahrzeugs erforderlich ist. Der Prozessor ist weiterhin dazu eingerichtet, die Neuausrichtung des Fahrzeugs in der Zielparklücke basierend auf dem bestimmten Ergebnis auszuführen, wobei die Parkumgebung Belegungszustände eines linken Parkplatzes und eines rechten Parkplatzes des Zielparkplatzes sind.

Weiterhin ist aus der US 10 262 537 B1 ein computerimplementiertes Verfahren bekannt, bei welchem eine Anfrage für einen Parkplatz ausgesandt wird. Weiterhin ist es bei dem Verfahren vorgesehen, dass wenigstens eine Antwort von wenigstens einem antwortenden Fahrzeug empfangen wird. Weiterhin wird wenigstens ein Satz von Antwortdaten aus der wenigstens einen empfangenen Antwort extrahiert, wobei jeder Satz des wenigstens einen Satzes von Antwortdaten einem antwortenden Fahrzeug zugeordnet ist und ein Fahrzeugattribut und einen Situationskontext für dieses entsprechende antwortende Fahrzeug umfasst. Bei dem Verfahren wird weiterhin ein dynamisches Parkmodell auf der Grundlage des Fahrzeugattributs und des situativen Kontextes erzeugt, die in jedem Satz des wenigstens einen Satzes von Antwortdaten enthalten sind, wobei das dynamische Parkmodell wenigstens eine geschätzte Position des wenigstens einen reagierenden Fahrzeugs abbildet. Das dynamische Parkmodell identifiziert ferner für jedes reagierende Fahrzeug einen oder mehrere geschätzte ungenutzte Abstände zwischen dem eigenen Fahrzeug und wenigstens einem umgebenden Objekt, welches dem reagierenden Fahrzeug zugeordnet ist. Bei dem Verfahren wird weiterhin eine Gruppe von einem oder mehreren verschiebbaren Fahrzeugen aus dem einen oder den mehreren reagierenden Fahrzeugen auf der Grundlage des dynamischen Parkmodells bestimmt. Überdies wird die Gruppe von dem einen oder den mehreren versetzbaren Fahrzeugen angewiesen, sich zu versetzen, um den angeforderten Parkraum zu schaffen.

Weiterhin ist aus der DE 10 2009 057 647 A1 ein Verfahren zum Betreiben eines Kraftfahrzeugs mit einer Schnittstelle bekannt, die zur Kommunikation mit einem weiteren Kraftfahrzeug ausgebildet ist. Bei dem Verfahren werden Daten und/oder eine Rangieranforderung im Zusammenhang mit einer Einpark- oder Ausparkanforderung des Kraftfahrzeugs oder noch eines weiteren Kraftfahrzeugs bei Vorhandensein der Einparkbeziehungsweise Ausparkanforderung über die Schnittstelle an das weitere Kraftfahrzeug ausgegeben. Das Kraftfahrzeug kann weiterhin eine Einheit umfassen, die dazu ausgebildet ist, das Kraftfahrzeug autonom zu rangieren.

Überdies offenbart die DE 10 2013 212 318 A1 ein Verfahren zum Durchführen eines automatisierten Einparkvorgangs eines Kraftfahrzeugs in eine Längsparklücke. Darüber hinaus ist aus der DE 10 2019 008 864 A1 ein Verfahren zum fahrerlosen Betreiben eines nach Abschluss eines Parkvorgangs in einem Längsparkplatz geparkten fahrerlosen Kraftfahrzeugs bekannt.

Aufgabe der vorliegenden Erfindung ist es, eine Lösung zu schaffen, welche ein besonders einfaches und effizientes Nutzen einer zur Verfügung stehenden Parkfläche ermöglicht.

Diese Aufgabe wird erfindungsgemäß durch die Gegenstände der unabhängigen Patentansprüche gelöst. Weiter mögliche Ausgestaltungen der Erfindung sind in den Unteransprüchen, der Beschreibung und den Figuren offenbart.

Die Erfindung betrifft ein Verfahren zum Betreiben eines Kraftfahrzeugs, bei welchem mittels einer Abstandserfassungseinrichtung eine erste Länge einer ersten Freifläche vor einem Kraftfahrzeug und eine zweite Länge einer zweiten Freifläche hinter dem Kraftfahrzeug ermittelt werden. Die Abstandserfassungseinrichtung kann insbesondere Teil des Kraftfahrzeugs sein. Bei den Freiflächen handelt es sich um jeweilige von dem Kraftfahrzeug befahrbare Flächen, welche frei von Objekten sind. Insbesondere handelt es sich bei den Freiflächen um jeweilige für ein Parken des Kraftfahrzeugs zur Verfügung stehende Flächen. Das Verfahren ist insbesondere bei einem Längsparken des Kraftfahrzeugs anwendbar, beispielsweise an einem Fahrbahnrand beziehungsweise auf einem Seitenstreifen. Die vor dem Kraftfahrzeug angeordnete erste Freifläche kann nach vorne durch ein weiteres Fahrzeug oder durch ein Objekt oder durch eine Parkplatzbegrenzung begrenzt sein. Die zweite Freifläche kann nach hinten von einem weiteren Fahrzeug oder durch ein Objekt oder durch eine Parkplatzbegrenzung begrenzt sein.

Bei dem Verfahren ist es weiterhin vorgesehen, dass mittels einer elektronischen Recheneinrichtung eine Summe aus der ersten Länge und der zweiten Länge mit einer vorgegebenen Gesamtparklänge verglichen wird. Die elektronische Recheneinrichtung kann insbesondere Teil des Kraftfahrzeugs sein. Mittels der elektronischen Recheneinrichtung werden somit die ermittelte erste Länge der ersten Freifläche und die ermittelte zweite Länge der zweiten Freifläche addiert und die resultierende Summe mit der vorgegebenen, insbesondere in der elektronischen Recheneinrichtung hinterlegten Gesamtparklänge verglichen. Die vorgegebene Gesamtparklänge kann insbesondere von einer Art des Kraftfahrzeugs abhängen, insbesondere von einem Wendekreis und/oder einem Radstand und/oder einem maximalen Lenkwinkel. Insbesondere kann ermittelt werden, wie viel Fläche das Kraftfahrzeug für ein Ausparken benötigt und in Abhängigkeit von der ermittelten benötigten Fläche für das Ausparken die Gesamtparklänge ermittelt und vorgegeben werden.

Bei dem Verfahren ist es weiterhin vorgesehen, dass mittels einer Steuereinrichtung in Abhängigkeit von dem Vergleich das Kraftfahrzeug für ein Einstellen der Freiflächen rangiert wird. Hierbei kann die Steuereinrichtung Teil des Kraftfahrzeugs sein und insbesondere dazu eingerichtet sein, das Kraftfahrzeug zumindest teilautomatisiert, insbesondere vollautomatisiert, zu steuern. Das bedeutet, dass mittels der Steuereinrichtung das Kraftfahrzeug zumindest teilautomatisiert, insbesondere vollautomatisiert und damit autonom, rangiert wird, um die Freiflächen in Abhängigkeit von einem Ergebnis des Vergleichs einzustellen. Es ist somit vorgesehen, dass das Kraftfahrzeug in Abhängigkeit von jeweiligen ermittelten Längen der Freiflächen sowie in Abhängigkeit von der vorgegebenen Gesamtparklänge rangiert wird, wodurch mit besonders hoher Sicherheit ein Ausparken des Kraftfahrzeugs ermöglicht wird. Eine Gefahr eines Eingeparkt-werdens des Kraftfahrzeugs durch weitere Fahrzeuge kann somit besonders gering gehalten werden.

Überdies ist es vorgesehen, dass beim Rangieren des Kraftfahrzeugs die erste Länge oder die zweite Länge auf die vorgegebene Gesamtparklänge eingestellt werden, wenn die erste Länge und/oder die zweite Länge jeweils größer sind als ein für die Freiflächen vorgegebener Grenzwert und die Summe der ersten Länge und der zweiten Länge größer ist als die vorgegebene Gesamtparklänge. Wird somit festgestellt, dass die erste Länge und/oder die zweite Länge größer sind als der jeweilige für die Längen gemeinsam oder für jede Länge einzeln vorgegebene Grenzwert und somit die jeweilige den vorgegebenen Grenzwert überschreitende Läng besonders groß ist, wobei gleichzeitig die Summe aus der ersten Länge und der zweiten Länge größer ist als die vorgegebene Gesamtparklänge, dann wird das Kraftfahrzeug derart rangiert, dass die erste Länge oder die zweite Länge zumindest im Wesentlichen der vorgegebenen Gesamtparklänge entspricht. Das Kraftfahrzeug wird somit bis zu der vorgegebenen Gesamtparklänge nach vorne oder nach hinten an eine Begrenzung der zugeordneten Freifläche, insbesondere an das weitere Fahrzeug oder das Objekt oder die Parkplatzbegrenzung, angenähert. Hierdurch wird sichergestellt, dass für das Kraftfahrzeug zumindest die Gesamtparklänge für ein Rangieren und somit für ein Ausparken zur Verfügung steht. Eine Gefahr eines Eingeparkt-werdens des Kraftfahrzeugs kann hierdurch besonders gering gehalten werden.

In einer Weiterbildung der Erfindung ist vorgesehen, dass beim Rangieren des Kraftfahrzeugs die erste Länge auf die vorgegebene Gesamtparklänge eingestellt wird, wenn die erste Länge kürzer ist als die zweite Länge, oder die zweite Länge auf die vorgegebene Gesamtparklänge eingestellt wird, wenn die zweite Länge kürzer ist als die erste Länge. Das bedeutet, dass diejenige Freifläche, welche die kürzere Länge aufweist, auf die Gesamtparklänge eingestellt wird, wenn die erste Länge und/oder die zweite Länge jeweils größer sind als der für die Freiflächen vorgegebene Grenzwert und die Summe der ersten Länge und der zweiten Länge größer ist als die vorgegebene Gesamtparklänge. Durch das Einstellen der jeweils kürzeren Länge auf die vorgegebene Gesamtparklänge wird ermöglicht, dass das Kraftfahrzeug beim Rangieren eine besonders kurze Strecke zurücklegt, wodurch das Kraftfahrzeug bei dem Verfahren besonders energieeffizient betrieben werden kann.

In weiterer Ausgestaltung der Erfindung ist es vorgesehen, dass beim Rangieren des Kraftfahrzeugs die erste Länge der ersten Freifläche und die zweite Länge der zweiten Freifläche aneinander angeglichen werden, wenn die Summe aus der ersten Länge und der zweiten Länge größer ist als die vorgegebene Gesamtparklänge und sowohl die erste Länge als auch die zweite Länge jeweils kürzer sind als der für die Freiflächen vorgegebene Grenzwert. Hierbei kann das Kraftfahrzeug insbesondere derart rangiert werden, dass die erste Länge der ersten Freifläche der zweiten Länge der zweiten Freifläche zumindest im Wesentlichen entspricht. Bei dem Verfahren wird somit ermittelt, dass dem Kraftfahrzeug höchstens die vorgegebene Gesamtparklänge als Summe aus der ersten Länge und der zweiten Länge zur Verfügung steht. Infolgedessen wird das Kraftfahrzeug zumindest im Wesentlichen mittig in einer Parklücke, in welcher sich das Kraftfahrzeug befindet, angeordnet. Hierbei wird die Parklücke durch die erste Freifläche, die zweite Freifläche sowie eine von dem Kraftfahrzeug überdeckte Fläche gebildet. Durch das zumindest im Wesentlichen mittige Anordnen des Kraftfahrzeugs in der Parklücke kann eine Gefahr eines zukünftigen Eingeparkt-werdens des Kraftfahrzeugs durch ein einziges weiteres Fahrzeug besonders gering gehalten werden, da durch die Freiflächen ausgehend von dem Kraftfahrzeug nach vorne sowie nach hinten besonders viel Platz zur Verfügung steht. Darüber hinaus kann eine Gefahr eines Einparkens wenigstens eines weiteren Fahrzeugs durch das Kraftfahrzeug aufgrund der zumindest im Wesentlichen mittigen Anordnung des Kraftfahrzeugs in der Parklücke zumindest im Wesentlichen vermieden werden.

In weiterer Ausgestaltung der Erfindung ist es vorgesehen, dass beim Rangieren des Kraftfahrzeugs die erste Länge der ersten Freifläche und die zweite Länge der zweiten Freifläche aneinander angeglichen werden, wenn die Summe aus der ersten Länge und der zweiten Länge größer als die vorgegebene Gesamtparklänge ist und sowohl die erste Länge als auch die zweite Länge jeweils kürzer sind als oder gleich groß sind wie der für die Freiflächen vorgegebene Grenzwert. Wird somit festgestellt, dass weder durch die erste Länge noch durch die zweite Länge der für die Freiflächen vorgegebene Grenzwert überschritten ist, dann erfolgt auch dann ein Anordnen des Kraftfahrzeugs zumindest im Wesentlichen mittig in der Parklücke, wenn die Summe aus der ersten Länge und der zweiten Länge größer als die vorgegebene Gesamtparklänge ist. Über den für die Freiflächen vorgegebenen Grenzwert kann somit vorgegeben werden, ob das Kraftfahrzeug mittig in der Parklücke anzuordnen ist oder ob eine der Freiflächen mit ihrer Länge auf die vorgegebene Gesamtparklänge einzustellen ist. Über den vorgegebenen Grenzwert kann festgelegt werden, dass bei besonders großen Parklücken ein Annähern des Kraftfahrzeugs bis auf die vorgegebene Gesamtparklänge an ein nächstes Fahrzeug beziehungsweise ein nächstes Objekt beziehungsweise eine nächste Parkplatzbegrenzung und somit eine nächste Begrenzung der Freiflächen ausgelöst wird, wohingegen bei einer im Vergleich dazu kleineren Parklücke ein zumindest im Wesentlichen mittiges Anordnen des Kraftfahrzeugs relativ zu den jeweiligen Begrenzungen der Freiflächen in der Parklücke ausgelöst wird. Hierdurch wird ein besonders effizientes Ausnutzen der Parklücke bei einer besonders geringen Wahrscheinlichkeit für ein Einparken des Kraftfahrzeugs ermöglicht.

In weiterer Ausgestaltung der Erfindung ist es vorgesehen, dass das Rangieren des Kraftfahrzeugs mittels der Steuereinrichtung ausgelöst wird, wenn mittels der Abstandserfassungseinrichtung festgestellt wird, dass die ermittelte erste Länge oder die ermittelte zweite Länge kürzer sind als eine für die Freiflächen vorgegebene Mindestlänge. Das bedeutet, dass mittels der Abstandserfassungseinrichtung die erste Länge der ersten Freifläche und die zweite Länge der zweiten Freifläche ermittelt und jeweils mit der vorgegebenen Mindestlänge für die Freiflächen verglichen wird. Hierbei kann die vorgegebene Mindestlänge für die Freiflächen gemeinsam oder für jede der Freiflächen individuell vorgegeben sein. Die vorgegebene Mindestlänge kann insbesondere in der elektronischen Recheneinrichtung hinterlegt sein. Mittels der elektronischen Recheneinrichtung werden folglich die ermittelte erste Länge und die ermittelte zweite Länge mit der vorgegebenen Mindestlänge verglichen. Wird mittels der elektronischen Recheneinrichtung ermittelt, dass die erste Länge oder die ermittelte zweite Länge kürzer sind als die für die Freiflächen vorgegebenen Mindestlänge, dann stellt die elektronische Recheneinrichtung für die Steuereinrichtung ein ermitteltes Ergebnis des Vergleichs der Längen mit der vorgegebenen Mindestlänge bereit. Bei Empfangen des Ergebnisses des Vergleichs, insbesondere in Abhängigkeit von dem Ergebnis des Vergleichs, wird mittels der Steuereinrichtung das Rangieren des Kraftfahrzeugs ausgelöst, sofern die ermittelte zweite Länge oder die ermittelte erste Länge kürzer ist als die vorgegebene Mindestlänge. Insbesondere wird mittels der Steuereinrichtung das Kraftfahrzeug derart rangiert, dass die erste Länge und die zweite Länge größer sind als die jeweilige der jeweiligen Freifläche zugeordnete Mindestlänge. Hierdurch kann sichergestellt werden, dass von dem Kraftfahrzeug ein durch die Mindestlänge charakterisierter Mindestabstand zu einem weiteren Fahrzeug beziehungsweise einem weiteren Objekt beziehungsweise einer Parkplatzbegrenzung eingehalten wird. Insbesondere kann das Unterschreiten der vorgegebenen Mindestlänge durch die erste Länge oder durch die zweite Länge durch ein vor dem Kraftfahrzeug oder hinter dem Kraftfahrzeug einparkendes Fahrzeugs oder durch ein Bewegen eines Objekts vor das Kraftfahrzeug oder hinter das Kraftfahrzeug verursacht werden. Infolgedessen kann mittels der Steuereinrichtung das Rangieren des Kraftfahrzeugs ausgelöst werden, um ein Einparken des Kraftfahrzeugs zu vermeiden und ein zukünftiges Ausparken des Kraftfahrzeugs aus der Parklücke zu ermöglichen.

In weiterer Ausgestaltung der Erfindung ist es vorgesehen, dass mittels der Steuereinrichtung das Kraftfahrzeug nur innerhalb eines vorgegebenen Toleranzbereichs rangiert wird. Dieser Toleranzbereich kann insbesondere von einem Fahrer des Kraftfahrzeugs vorgegeben sein. Beispielsweise kann der vorgegebene Toleranzbereich als ausgehend vom Kraftfahrzeug zwei Meter nach vorne und zwei Meter nach hinten definiert sein. Das bedeutet, dass das Rangieren des Kraftfahrzeugs lediglich innerhalb des Toleranzbereichs erfolgt und somit ein Herausbewegen des Kraftfahrzeugs aus dem vorgegebenen Toleranzbereich beim Rangieren des Kraftfahrzeugs unterbleibt. Hierdurch kann vermieden werden, dass das Kraftfahrzeug durch das Rangieren besonders weit von einer Ausgangsposition wegbewegt wird und somit ein Fahrer Schwierigkeiten beim Suchen seines in der Ausgangsposition ursprünglich abgestellten Kraftfahrzeugs haben könnte.

In weiterer Ausgestaltung der Erfindung ist es vorgesehen, dass mittels der Abstandserfassungseinrichtung die erste Länge der ersten Freifläche vor dem Kraftfahrzeug und die zweite Länge der zweiten Freifläche hinter dem Kraftfahrzeug mehrmals und in regelmäßigen Abständen ermittelt werden. Das mehrmalige Ermitteln der ersten Länge und der zweiten Länge mittels der Abstandserfassungseinrichtung ermöglicht ein kontinuierliches Überwachen der Längen und insbesondere eines Einhaltens der vorgegebenen Mindestlänge. Über das Erfassen der ersten Länge und der zweiten Länge mehrmals und in regelmäßigen Abständen mittels der Abstandserfassungseinrichtung können Veränderungen der ersten Länge und/oder der zweiten Länge besonders einfach und zuverlässig ermittelt werden und in Abhängigkeit von den ermittelten Veränderungen der ersten Länge und/oder der zweiten Länge das Kraftfahrzeug mittels der Steuereinrichtung rangiert werden. Hierdurch wird ermöglicht, dass das Kraftfahrzeug bei einer geänderten Parksituation , insbesondere aufgrund einer Veränderung der Parklücke, in seiner Position innerhalb der veränderten Parklücke angepasst wird, um ein besonders effizientes Nutzen von zur Verfügung stehender Parkflächen zu ermöglichen und darüber hinaus eine Gefahr eines Einparkens des Kraftfahrzeugs besonders gering zu halten.

In weiterer Ausgestaltung der Erfindung ist es vorgesehen, dass beim Rangieren des Kraftfahrzeugs mittels einer Ausgabeeinrichtung wenigstens ein Warnsignal ausgegeben wird. Mittels der Ausgabeeinrichtung kann das wenigstens eine Warnsignal akustisch und/oder optisch ausgegeben werden, insbesondere in einer Umgebung des Kraftfahrzeugs. Über das wenigstens eine von der Ausgabeeinrichtung bereitgestellte Warnsignal können weitere Verkehrsteilnehmer vor dem sich beim Rangieren bewegenden Kraftfahrzeug gewarnt werden. Hierdurch kann eine Gefahr einer Kollision des Kraftfahrzeugs mit dem weiteren Verkehrsteilnehmer besonders gering gehalten werden, da der weitere Verkehrsteilnehmer über das wenigstens eine Warnsignal über die Bewegung des Kraftfahrzeugs informiert werden kann. Für das Bereitstellen des wenigstens einen Warnsignals kann die Ausgabeeinrichtung beispielsweise wenigstens einen Lautsprecher und/oder wenigstens eine Beleuchtungseinrichtung und/oder wenigstens eine Bildschirmeinrichtung umfassen. Insbesondere ist die Ausgabeeinrichtung Teil des Kraftfahrzeugs.

Die Erfindung betrifft des Weiteren ein Kraftfahrzeug, welches dazu eingerichtet ist, in einem Verfahren, wie es bereits im Zusammenhang mit dem erfindungsgemäßen Verfahren beschrieben worden ist, betrieben zu werden. Das Kraftfahrzeug umfasst eine Abstandserfassungseinrichtung, welche dazu eingerichtet ist, eine erste Länge einer ersten Freifläche vor dem Kraftfahrzeug und eine zweite Länge einer zweiten Freifläche hinter dem Kraftfahrzeug zu ermitteln. Weiterhin umfasst das Kraftfahrzeug eine elektronische Recheneinrichtung, welche dazu eingerichtet ist, eine Summe aus der ersten Länge und der zweiten Länge mit einer vorgegebenen Gesamtparklänge zu vergleichen. Überdies weist das Kraftfahrzeug eine Steuereinrichtung auf, welche dazu eingerichtet ist, in Abhängigkeit von dem Vergleich das Kraftfahrzeug für ein Einstellen der Freifläche zu rangieren, insbesondere zumindest teilautomatisiert, insbesondere vollautomatisiert zu rangieren. Die Steuereinrichtung ist weiterhin dazu eingerichtet ist, beim Rangieren des Kraftfahrzeugs die erste Länge oder die zweite Länge auf die vorgegebene Gesamtparklänge einzustellen, wenn die erste Länge und/oder die zweite Länge jeweils größer sind als ein für die Freiflächen vorgegebener Grenzwert und die Summe der ersten Länge und der zweiten Länge größer ist als die vorgegebene Gesamtparklänge. Vorteile und vorteilhafte Weiterbildungen des erfindungsgemäßen Verfahrens sind als Vorteile und vorteilhafte Weiterbildungen des erfindungsgemäßen Kraftfahrzeugs anzusehen und umgekehrt.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ein Ablaufschema für ein Verfahren, bei welchem ein Kraftfahrzeug innerhalb einer Parklücke rangiert wird; und
- Fig. 2: ein weiteres Ablaufschema des Verfahrens, bei welchem das Kraftfahrzeug in einer Parklücke rangiert wird.

Gleiche oder funktionsgleiche Elemente sind in den Figuren mit den gleichen Bezugszeichen versehen.

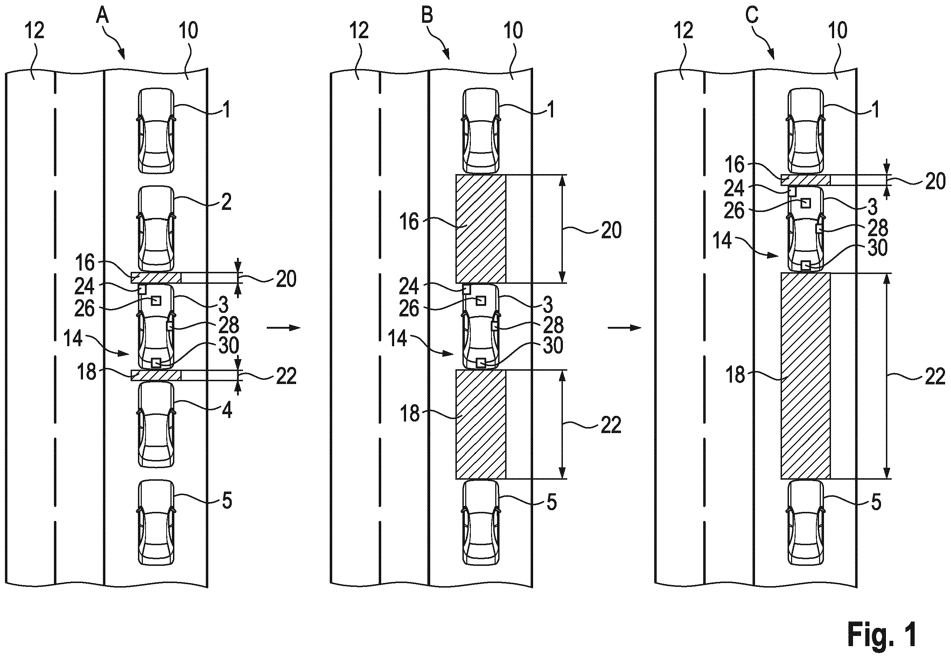

In Fig. 1 ist ein Kraftfahrzeug 3 zu unterschiedlichen Zeitpunkten A, B, C gezeigt, wobei das Kraftfahrzeug 3 auf einem Parkstreifen 10 neben einem Fahrweg 12 parkt. Eine für das Kraftfahrzeug 3 zur Verfügung stehende Parklücke 14 auf dem Parkstreifen 10 kann sich über die Zeit ändern. Um eine von dem Parkstreifen 10 bereitgestellte Parkfläche besonders effizient nutzen zu können, wird durch ein Rangieren des Kraftfahrzeugs 3 eine jeweilige Position des Kraftfahrzeugs 3 an jeweilige Maße der Parklücke 14 angepasst.

Die für das Kraftfahrzeug 3 zur Verfügung stehende Parklücke 14 setzt sich aus einer ersten Freifläche 16 in Fahrtrichtung vor dem Kraftfahrzeug 3 und einer zweiten Freifläche 18 in Fahrtrichtung hinter dem Kraftfahrzeug 3 sowie einem Bereich der zur Verfügung stehenden Parkfläche zusammen, welchen das Kraftfahrzeug 3 überdeckt. Das Rangieren des Kraftfahrzeugs 3 in der Parklücke 14 erfolgt in Abhängigkeit von einer ersten Länge 20 der ersten Freifläche 16 und in Abhängigkeit von einer zweiten Länge 22 der zweiten Freifläche 18. Um die erste Länge 20 der ersten Freifläche 16 und die zweite Länge 22 der zweiten Freifläche 18 ermitteln zu können, umfasst das Kraftfahrzeug 3 eine schematisch mit einem Kästchen gekennzeichnete Abstandserfassungseinrichtung 24. Die Abstandserfassungseinrichtung 24 kann insbesondere wenigstens eine Kamera und/oder ein Radar und/oder ein Lidar und/oder eine Ultraschallmesseinrichtung umfassen. Das Kraftfahrzeug 3 umfasst des Weiteren eine schematische mit einem Kästchen gekennzeichnete elektronische Recheneinrichtung, mittels welcher die mittels der Abstandserfassungseinrichtung 24 ermittelte erste Länge 20 und zweite Länge 22 empfangbar und analysierbar sind. Weiterhin umfasst das Kraftfahrzeug 3 die Steuereinrichtung 28, welche schematisch mit einem Kästchen gekennzeichnet ist und welche dazu eingerichtet ist, das Kraftfahrzeug 3 zumindest teilautomatisiert, insbesondere vollautomatisiert und damit autonom, zu steuern, insbesondere längszusteuern. Insbesondere ist für das Rangieren das Kraftfahrzeug 3 mittels der Steuereinrichtung 28 zu steuern.

Insbesondere kann das Rangieren des Kraftfahrzeugs 3 ausgelöst werden, wenn die erste Länge 20 und die zweite Länge 22 jeweils größer sind als ein für die Freiflächen 16, 18 vorgegebener Grenzwert oder die erste Länge 20 und/oder die zweite Länge 22 kürzer sind als eine für die Freiflächen 16, 18 vorgegebene Mindestlänge. Das bedeutet, dass mittels der Steuereinrichtung 28 das Kraftfahrzeug 3 in der Parklücke 14 rangiert wird, wenn mittels der elektronischen Recheneinrichtung 26 festgestellt worden ist, dass die erste Länge 20 oder die ermittelte zweite Länge 22 kürzer ist als die für die Freiflächen 16, 18 gemeinsam oder individuell vorgegebene Mindestlänge ist.

Für ein Rangieren des Kraftfahrzeugs 3 ist es vorgesehen, dass mittels der Abstandserfassungseinrichtung 24 die erste Länge 20 der ersten Freifläche 16 und die zweite Länge 22 der zweiten Freifläche 18 ermittelt werden. Weiterhin ist es vorgesehen, dass mittels der elektronischen Recheneinrichtung 26 die ermittelte erste Länge 20 und die ermittelte zweite Länge 22 addiert werden und die Summe aus der ersten Länge 20 und der zweiten Länge 22 mit einer vorgegebenen Gesamtparklänge verglichen wird. Diese vorgegebene Gesamtparklänge kann in der elektronischen Recheneinrichtung 26 hinterlegt sein. In Abhängigkeit von einem Ergebnis des Vergleichs wird das Kraftfahrzeug 3 mittels der Steuereinrichtung 28 für ein Einstellen der Freiflächen 16, 18 rangiert.

Die Gesamtparklänge ist in Abhängigkeit von einem Bewegungsbereich des Kraftfahrzeugs 3 vorgegeben, welchen das Kraftfahrzeug 3 benötigt, um auszuparken, insbesondere aus der Parklücke 14 beziehungsweise von dem Parkstreifen 10. Die vorgegebene Gesamtparklänge entspricht somit einen vorgegebenen Mindestwert für die Summe aus der ersten Länge 20 und der zweiten Länge 22, welcher vorzuhalten ist, um das Bereitstellen des Bewegungsbereichs und somit das Ausparken des Kraftfahrzeugs 3 aus der Parklücke 14 zu gewährleisten.

In dem ersten Zeitpunkt A sind gemeinsam mit dem Kraftfahrzeug 3 weitere Fahrzeuge, ein erstes Fahrzeug 1, ein zweites Fahrzeug 2, ein viertes Fahrzeug 4 und ein fünftes Fahrzeug 5 auf dem Parkstreifen 10 abgestellt. Von dem ersten Zeitpunkt A zu dem darauffolgenden zweiten Zeitpunkt B werden das zweite Fahrzeug 2 und das vierte Fahrzeug 4 von dem Parkstreifen 10 entfernt und somit ausgeparkt. Die für das Kraftfahrzeug 3 bereitstehende Parklücke 14 ist somit von dem ersten Zeitpunkt A zu dem zweiten Zeitpunkt B vergrößert worden. Infolge der zum zweiten Zeitpunkt B im Vergleich zum ersten Zeitpunkt A vergrößerten, für das Kraftfahrzeug 3 zur Verfügung stehenden Parklücke 14 wird das Kraftfahrzeug 3 auf den zweiten Zeitpunkt B folgend rangiert, wodurch das Kraftfahrzeug 3 in dem dritten Zeitpunkt C, welcher auf den zweiten Zeitpunkt B nachfolgt, im Vergleich zum zweiten Zeitpunkt B neu angeordnet ist.

Folglich parken von dem ersten Zeitpunkt A auf den zweiten Zeitpunkt B das zweite Fahrzeug 2 und das vierte Fahrzeug 4 von dem Parkstreifen 10 aus, wodurch die zum zweiten Zeitpunkt B resultierende erste Länge 20 und zweite Länge 22 jeweils größer sind als der für die jeweiligen Freiflächen 16, 18 vorgegebene Grenzwert. Weiterhin ist die im zweiten Zeitpunkt B resultierende Summe aus der ersten Länge 20 und der zweiten Länge 22 größer als die vorgegebene Gesamtparklänge. Infolgedessen wird die kürzere der ersten Länge 20 und der zweiten Länge 22 zumindest im Wesentlichen auf die vorgegebene Gesamtparklänge eingestellt. Durch das Einstellen der kürzeren Länge auf die Gesamtparklänge aus der ersten Länge 20 und der zweiten Länge 22 wird ermöglicht, dass das Kraftfahrzeug 3 für das Einstellen einer der Längen 20, 22 auf die vorgegebene Gesamtparklänge das Kraftfahrzeug 3 über eine besonders geringe Wegstrecke zu bewegen ist. Vorliegend wird die erste Länge 20 auf die vorgegebene Gesamtparklänge eingestellt, indem das Kraftfahrzeug 3 an das erste Fahrzeug 1 angenähert wird. Hierdurch ist das Kraftfahrzeug 3 die vorgegebene Gesamtparklänge zu dem ersten Fahrzeug 1 beabstandet. Parkt zukünftig ein weiteres Fahrzeug auf der zweiten Freifläche 18, ist eine Gefahr eines Eingeparkt-werdens des Kraftfahrzeugs 3 zwischen dem weiteren Fahrzeug und dem ersten Fahrzeug 1 besonders gering, da das Kraftfahrzeug 3 beim Rangieren die vorgegebene Gesamtparklänge zu dem ersten Fahrzeug 1 vorhält. Das Vorhalten der vorgegebenen Gesamtparklänge zu dem ersten Fahrzeug 1 ermöglicht, dass ein sicheres Ausparken des Kraftfahrzeugs 3 aus der Parklücke 14 und somit von dem Parkstreifen 10 gewährleistet wird.

Zum ersten Zeitpunkt A wird das Kraftfahrzeug 3, welches eine Umparkautomatik aufweist, die dazu eingerichtet ist, das beschriebene Verfahren zum Rangieren des Kraftfahrzeugs 3 durchzuführen, in der Parklücke 14 abgestellt. Bei einer Anordnung des Kraftfahrzeugs 3 in der Parklücke 14 kann die Umparkautomatik aus einem deaktivierten Zustand in einen aktivierten Zustand überführt und somit aktiviert werden. In dem aktivierten Zustand können mittels der Abstandserfassungseinrichtung 24 die erste Länge 20 und die zweite Länge 22 mehrmals und in regelmäßigen Abständen ermittelt werden, wodurch die Längen 20 und 22 mittels der Abstandserfassungseinrichtung 24 kontinuierlich überprüfbar sind. Von dem ersten Zeitpunkt A bis zum zweiten Zeitpunkt B können das zweite Fahrzeug 2 und das vierte Fahrzeug 4 vor und hinter dem Kraftfahrzeug 3 jeweils den Parkstreifen 10 verlassen. Infolgedessen resultiert zum zweiten Zeitpunkt B die im Vergleich zum ersten Zeitpunkt A vergrößerte Parklücke 14, welche hinsichtlich ihrer Aufteilung auf die Freiflächen 16, 18 für eine Nutzung für Kompaktwagen ungünstig sein kann. Zum dritten Zeitpunkt C ist das Kraftfahrzeug 3 im Vergleich zum zweiten Zeitpunkt B rangiert und wodurch die vorgegebene Gesamtparklänge vorliegend als Abstand zum ersten Fahrzeug 1 eingestellt ist. Die resultierende zweite Freifläche 18 kann somit eine besonders hohe Auslastung einer durch den Parkstreifen 10 zur Verfügung gestellten Parkfläche ermöglichen.

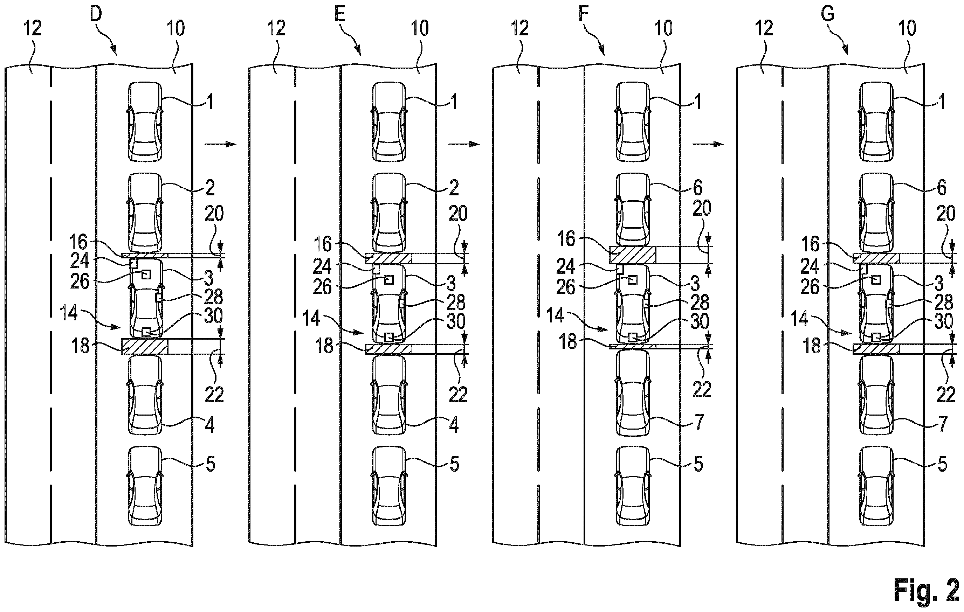

In Fig. 2 ist eine weitere Parksituation des Kraftfahrzeugs 3 mit dem ersten Fahrzeug 1, dem zweiten Fahrzeug 2, dem vierten Fahrzeug 4, dem fünften Fahrzeug 5, einem sechsten Fahrzeug 6 sowie einem siebten Fahrzeug 7 in zeitlich aufeinanderfolgenden Zeitpunkten D, E, F, G gezeigt.

In dem in Fig. 2 gezeigten dritten Zeitpunkt D ist die erste Länge 20 und somit der Abstand des Kraftfahrzeugs 3 zu dem zweiten Fahrzeug 2 kleiner als die für die erste Freifläche 16 vorgegebene Mindestlänge. Infolge des Ermittelns des Unterschreitens der vorgegebenen Mindestlänge durch die ermittelte erste Länge 20 wird das Rangieren des Kraftfahrzeugs 3 innerhalb der Parklücke 14 ausgelöst. Die für die Freiflächen 16, 18 vorgegebene Mindestlänge kann insbesondere in der elektronischen Recheneinrichtung 26 hinterlegt sein.

Wird mittels der elektronischen Recheneinrichtung 26 in Abhängigkeit von der ermittelten ersten Länge 20 und der ermittelten zweiten Länge 22 festgestellt, dass die Summe aus der ersten Länge 20 und der zweiten Länge 22 kleiner oder gleich der vorgegebenen Gesamtparklänge ist, dann wird das Kraftfahrzeug 3 zumindest im Wesentlichen mittig in der Parklücke 14 angeordnet, wodurch die erste Länge 20 der ersten Freifläche 16 und die zweite Länge 22 der zweiten Freifläche 18 aneinander angeglichen werden. Wird mittels der elektronischen Recheneinrichtung 26 ermittelt, dass die Summe aus der ersten Länge 20 und der zweiten Länge 22 größer als die vorgegebene Gesamtparklänge ist und sowohl die erste Länge 20 als auch die zweite Länge 22 jeweils kürzer sind oder gleich groß sind wie die jeweiligen für die Freiflächen 16, 18 vorgegebenen Grenzwerte, dann wird mittels der Steuereinrichtung 28 das Kraftfahrzeug 3 ebenfalls mittig in der Parklücke 14 angeordnet, wodurch die erste Länge 20 der ersten Freifläche 16 und die zweite Länge 22 der zweiten Freifläche 18 aneinander angeglichen werden.

In einer Zeitspanne vom dritten Zeitpunkt D auf einen vierten Zeitpunkt E wird somit das Kraftfahrzeug 3 innerhalb der Parklücke 14 rangiert, wodurch das Kraftfahrzeug 3 zum fünften Zeitpunkt E zumindest im Wesentlichen mittig in der Parklücke 14 angeordnet ist. Parken in einer weiteren Zeitspanne zwischen dem fünften Zeitpunkt E und einem sechsten Zeitpunkt F das zweite Fahrzeug 2 und das vierte Fahrzeug 4 von dem Parkstreifen 10 aus und parken infolgedessen das sechste Fahrzeug 6 und das siebte Fahrzeug 7 auf dem Parkstreifen 10 ein, dann kann zum sechsten Zeitpunkt F eine erneute Unterschreitung der vorgegebenen Mindestlänge durch eine der Längen 20, 22, vorliegend der zweiten Länge 22, erfolgen. Zum sechsten Zeitpunkt F kann somit mittels der elektronischen Recheneinrichtung 26 ein Unterschreiten der vorgegebenen Mindestlänge durch die zweite Länge 22 und somit durch den Abstand zwischen dem Kraftfahrzeug 3 und dem siebten Fahrzeug 7 ermittelt werden. Infolgedessen kann die elektronische Recheneinrichtung 26 ein erneutes Rangieren des Kraftfahrzeugs 3 auslösen. In einer Zeitspanne von dem sechsten Zeitpunkt F bis zu einem siebten Zeitpunkt G wird das Kraftfahrzeug 3 erneut in der Parklücke 14 rangiert, wodurch das Kraftfahrzeug 3 zu dem siebten Zeitpunkt G zumindest im Wesentlichen mittig in der Parklücke 14 angeordnet ist.

Bei dem Verfahren kann es insbesondere vorgesehen sein, dass das Kraftfahrzeug 3 lediglich innerhalb eines vorgegebenen Toleranzbereichs mittels der Steuereinrichtung 28 rangiert wird. Dieser vorgegebene Toleranzbereich ist insbesondere in der elektronischen Recheneinrichtung 26 hinterlegt. Der Toleranzbereich kann von einer Person, insbesondere einem Fahrer des Kraftfahrzeugs 3, vorgegeben sein.

Um eine Kollisionsgefahr des Kraftfahrzeugs 3 beim Rangieren mit anderen Verkehrsteilnehmern besonders gering zu halten, kann das Kraftfahrzeug 3 eine schematisch mit einem Kästchen gekennzeichnete Ausgabeeinrichtung 30 aufweisen. Die Ausgabeeinrichtung 30 ist insbesondere dazu eingerichtet, wenigstens ein Warnsignal in einer Umgebung des Kraftfahrzeugs 3 auszugeben. Hierbei kann mittels der Ausgabeeinrichtung 30 insbesondere wenigstens ein akustisches und/oder optisches Warnsignal bereitgestellt werden. Über das akustische und/oder optische wenigstens eine Warnsignal ist wenigstens ein weiterer Verkehrsteilnehmer zu warnen, insbesondere indem das wenigstens eine optische und/oder akustische Warnsignal das Rangieren des Kraftfahrzeugs 3 charakterisiert.

Dem beschriebenen Verfahren zum Betreiben des Kraftfahrzeugs 3 liegt die Erkenntnis zugrunde, dass besonders im städtischen Raum Personenkraftwagen häufig hintereinander in parallel zur Straße verlaufenden Parkstreifen 10 abgestellt werden. Im Zeitverlauf parken auf diesen Parkstreifen 10 Fahrzeuge mit unterschiedlichen Längsabmessungen ein und aus, wodurch wiederum neue Parklücken 14 in unterschiedlicher Größe entstehen. Mit Blick auf eine Gesamtauslastung einer verfügbaren Parkfläche können diese resultierenden Parklücken suboptimal ausfallen. Unterdurchschnittlich kleine Parklücken können nur von wenigen Fahrzeugen befahren werden und bleiben daher oft lange ungenutzt. Überdurchschnittlich große Parkflächen wiederum werden auch von kleinen Fahrzeugen befahren. Hierdurch können große, ungenutzte Zwischenräume zwischen jeweiligen auf dem Parkstreifen 10 parkenden Fahrzeugen entstehen. In beiden genannten Fällen wird daher eine verfügbare Parkfläche oft nicht bestmöglich genutzt.

Weiterhin besteht für auf Parkstreifen 10 parkende Fahrzeuge eine Gefahr eines Eingeparktwerdens. Diese Gefahr entsteht dadurch, dass nachträglich auf den Parkstreifen 10 fahrende Fahrzeuge einen geringen Abstand zu vorgelagerten beziehungsweise nachgelagerten Fahrzeugen einhalten können, wodurch diese unter Umständen weitgehend manövrierunfähig und somit am Ausparken gehindert werden. In beiden genannten Szenarien kann eine Lösung zum automatischen Umparken von Fahrzeugen in Abwesenheit der Fahrzeugführer zur Maximierung beziehungsweise Optimierung verfügbarer Parkplätze beitragen. Durch das beschriebene Verfahren zum Betreiben des Kraftfahrzeugs 3 wird eine Lösung zum automatischen Umparken bereitgestellt. Das beschriebene Verfahren zum Betreiben des Kraftfahrzeugs 3, welches im Folgenden auch als Umparkautomatik bezeichnet wird, ermöglicht, dass auf Parkstreifen 10 parkende Fahrzeuge automatisch und ohne Beisein eines Fahrzeugführers in Längsrichtung repositioniert werden können, wodurch eine zur Verfügung stehende Parkfläche besonders effizient genutzt werden kann beziehungsweise eine individuelle Parksituation des Kraftfahrzeugs 3 optimiert werden kann. Die Umparkautomatik beruht vorliegend auf zwei technischen Grundfunktionen. Zum einen einer automatischen Überprüfung von Abständen zu vorgelagert und nachgelagert zu dem Kraftfahrzeug 3 parkenden Fahrzeugen, insbesondere kontinuierlich oder in regelmäßigen Intervallen, ohne Beisein des Fahrzeugführers. Diese automatische Überprüfung kann insbesondere mithilfe serienüblicher Parksensoren erfolgen. Vorliegend erfolgt die Überprüfung der Abstände und somit der ersten Länge 20 und der zweiten Länge 22 mittels der Abstandserfassungseinrichtung 24. Bei der zweiten technischen Grundfunktion handelt es sich um eine automatische Längsbewegung des Kraftfahrzeugs 3 entlang des Parkstreifens 10 in Reaktion auf die bei der automatischen Überprüfung der Abstände registrierten Abstände ohne Beisein des Fahrzeugführers. Diese automatische Längsbewegung kann insbesondere mithilfe serienüblicher Parklenksysteme erfolgen, vorliegend erfolgt die automatische Längsbewegung mittels der Steuereinrichtung 28. Für ein Umsetzen der Umparkautomatik kann das Kraftfahrzeug 3 insbesondere ein Shift-by-Wire-Automatikgetriebe umfassen.

In Fig. 1 ist ein erstes Anwendungsszenario für die Umparkautomatik gezeigt. Beim Parken des Kraftfahrzeugs 3 mit installierter Umparkautomatik kann die Umparkautomatik automatisch oder durch manuelle Funktionsauswahl des Fahrzeugführers aktiviert werden. Für das automatische Aktivieren kann die Umparkautomatik nach einem Abstellen des Kraftfahrzeugs 3 bei einem Abschließen des Kraftfahrzeugs 3 aktiviert werden. Alternativ oder zusätzlich kann die Umparkautomatik gestartet werden, wenn mittels der elektronischen Recheneinrichtung 26 ermittelt worden ist, dass das Kraftfahrzeug 3 auf einer Parkfläche abgestellt worden ist. Hierfür kann die elektronische Recheneinrichtung 26 für eine besonders gute Parkflächenerkennung mit Machine Learning trainiert sein. Für die manuelle Funktionsauswahl des Fahrzeugführers zum Starten der Umparkautomatik kann eine Benutzereingabe des Fahrzeugführers an einem mobilen elektronischen Endgerät, wie beispielsweise einem Smartphone, oder direkt am Kraftfahrzeug 3 empfangen werden. Das mobile elektronische Endgerät kann die empfangene Benutzereingabe für die elektronische Recheneinrichtung 26 bereitstellen, mittels welcher beim Empfangen der Benutzereingabe das Rangieren des Kraftfahrzeugs 3 ausgelöst wird. Für das Auslösen der Umparkautomatik kann mittels der elektronischen Recheneinrichtung 26 das Erfassen der ersten Länge 20 und der zweiten Länge 22 durch die Abstandserfassungseinrichtung 24 ausgelöst werden.

Insbesondere kann die Umparkautomatik gestartet werden, wenn von dem Fahrzeugführer die Benutzereingabe empfangen worden ist, welche charakterisiert, dass das Kraftfahrzeug 3 in Längsrichtung zwischen zwei weiteren Fahrzeugen angeordnet ist. Alternativ kann die Umparkautomatik automatisch gestartet werden, wenn über einen Abgleich einer ermittelten Position des Kraftfahrzeugs 3, insbesondere über ein globales Navigationssatellitensystem ermittelt worden ist, dass sich das Kraftfahrzeug 3 auf einer hinterlegten Parkfläche, insbesondere einer in Kartendaten hinterlegten Parkfläche, befindet.

Um ein besonders vorteilhaftes Freigeben des Aktivierens der Umparkautomatik für den Fahrzeugführer über das mobile elektronische Endgerät zu ermöglichen, kann es vorgesehen sein, dass mittels des mobilen elektronischen Endgeräts eine Kamera des Kraftfahrzeugs 3 aktiviert wird. Ein von der Kamera erfasstes Bild kann von dem Kraftfahrzeug 3 für das mobile elektronische Endgerät bereitgestellt werden. Über das mittels des mobilen elektronischen Endgeräts ausgegebene Bild kann der Fahrzeugführer über eine Umgebung des Kraftfahrzeugs 3 informiert werden. Infolgedessen kann der Fahrzeugführer entscheiden, ob das Kraftfahrzeug 3 rangiert werden soll.

Um ein Einhalten von Verkehrsregeln, insbesondere hinsichtlich eines Freihaltens von Einfahrten, zu ermöglichen sowie ein für einen Fahrzeugführer zu weites Bewegen des Kraftfahrzeugs 3 beim Rangieren des Kraftfahrzeugs 3 zu vermeiden, kann der Fahrzeugführer mittels der Benutzereingabe den Toleranzbereich für das Kraftfahrzeug 3 vorgeben. Beispielsweise kann der Fahrzeugführer vorgeben, dann das Kraftfahrzeug 3 höchstens zwei Meter nach vorne oder höchstens zwei Meter nach hinten beim Rangieren zu bewegen ist. Es kann somit eine Begrenzung eines maximalen Fahrwegs gegenüber einer Ausgangsparkposition des Kraftfahrzeugs 3 vorgesehen sein.

Infolge des Aktivierens der Umparkautomatik kann das Kraftfahrzeug 3 dauerhaft und dabei kontinuierlich oder in Zeitintervallen jeweilige Abstände und somit die erste Länge 20 und die zweite Länge 22 zu in Längsrichtung des Kraftfahrzeugs 3 vorgelagerten und nachgelagert parkenden Fahrzeugen ermitteln. Ein Verlassen oder Eintreffen vor- oder nachgelagerter Fahrzeuge im Zeitverlauf kann unter Umständen zur Bildung unzweckmäßig proportionierter Parklücken und somit einer suboptimalen Auslastung der zur Verfügung stehenden Parkfläche führen. In diesem Fall kann die Umparkautomatik des Kraftfahrzeugs 3 veränderte Abstände zu benachbarten Fahrzeugen registrieren und das Rangieren auslösen, um ein Optimieren der ersten Länge 20 und der zweiten Länge 22 und somit der Abstände zu ermöglichen. Für das Rangieren des Kraftfahrzeugs 3 wird ein Motor des Kraftfahrzeugs 3 automatisch gestartet und das Kraftfahrzeug 3 wird in Längsrichtung mit besonders geringer Geschwindigkeit und unter kontinuierlicher Abstandskontrolle vorgesetzt beziehungsweise zurückgesetzt, bis ein vordefinierter Mindestabstand oder die vorgegebene Gesamtparklänge zu einem jeweiligen Nachbarfahrzeug erreicht wird. Beim Rangieren des Kraftfahrzeugs 3 kann das Kraftfahrzeug 3 durchgängig verschlossen sein. Für eine besonders hohe Sicherheit für weitere Verkehrsteilnehmer können während des Rangierens akustische und/oder optische Warnsignale, insbesondere ein Warnblinklicht, bereitgestellt werden. Bei Beendigung des Rangierens des Kraftfahrzeugs 3 wird der Motor des Kraftfahrzeugs 3 abgeschaltet. Eine durch das Rangieren des Kraftfahrzeugs 3 neu geschaffene Anordnung des Kraftfahrzeugs 3 in der Parklücke 14 kann somit zu einer Verbesserung einer Nutzung der zur Verfügung stehenden Parkfläche für Kraftfahrzeuge führen. Insbesondere kann zumindest die erste Länge 20 auf die vorgegebene Gesamtparklänge eingestellt werden, wodurch ein Vorwärtsausparken des Kraftfahrzeugs 3 aus der Parklücke 14 mit besonders großer Sicherheit ermöglicht wird.

In dem zweiten Anwendungsszenario, welches in Fig. 4 gezeigt ist, ist dargestellt, wie mittels der Umparkautomatik eine Optimierung der Anordnung des Kraftfahrzeugs 3 in der Parklücke 14 erfolgen kann. Bei dem Verfahren können Abstände des Kraftfahrzeugs 3 zu benachbarten Fahrzeugen ermittelt werden, welche unterhalb der den jeweiligen Freiflächen 16, 18 zugeordneten vorgegebenen Mindestlängen liegen, wodurch die Anordnung des Kraftfahrzeugs 3 in der Parklücke 14 über das Rangieren korrigiert und infolgedessen die Freiflächen 16, 18 eingestellt werden können. Hierdurch kann zum einen eine möglichst mittige Positionierung des Kraftfahrzeugs 3 in der Parklücke 14 und somit gegenüber vor- und nachgelagerten Fahrzeugen initiiert werden, wodurch diesen benachbarten Fahrzeugen besonders viel Raum zum Ausparken bereitgestellt wird. Zum anderen kann eine Gefahr eines Eingeparktwerdens des Kraftfahrzeugs 3 besonders gering gehalten werden. Parkt, wie im sechsten Zeitpunkt F gezeigt ist, das Fahrzeug 7 besonders dicht am Kraftfahrzeug 3, insbesondere näher als die für die zugeordnete Freifläche 16, 18 vorgegebene Mindestlänge, wodurch das Kraftfahrzeug 3 zumindest weitgehend manövrierunfähig werden kann, dann kann über das Rangieren des Kraftfahrzeugs 3 ein erforderlicher Park- und Manövrierraum des Kraftfahrzeugs 3 durch Vorsetzen beziehungsweise Zurücksetzen des Kraftfahrzeugs 3 in eine entgegengerichtete Längsrichtung sichergestellt werden.

Das beschriebene Verfahren ermöglicht eine automatische Fahrzeugbewegung des Kraftfahrzeugs 3 nach Verlassen des Kraftfahrzeugs 3 durch den Fahrzeugführer für eine Optimierung einer Parksituation des Kraftfahrzeugs 3. Die Umparkautomatik funktioniert vorteilhafterweise auch dann, wenn lediglich das Kraftfahrzeug 3 dazu eingerichtet ist, das beschriebene Verfahren durchzuführen. Eine Befähigung der weiteren Fahrzeuge zum Durchführen des Verfahrens ist für das Betreiben des Kraftfahrzeugs 3 nicht erforderlich.

Das beschriebene Verfahren zum Betreiben des Kraftfahrzeugs 3 ermöglicht vorteilhafterweise eine Optimierung einer Nutzung von öffentlichen Parkflächen sowie zumindest im Wesentlichen ein Verhindern eines Eingeparktwerdens des Kraftfahrzeugs 3 beziehungsweise ein Einparken weiterer Fahrzeuge.

Insgesamt zeigt die Erfindung, wie eine optimierte Ausnutzung von Parkraum durch die Umparkautomatik ermöglicht werden kann.

### Bezugszeichenliste

- 10: Parkstreifen
- 12: Fahrweg
- 14: Parklücke
- 16: erste Freifläche
- 18: zweite Freifläche
- 20: erste Länge
- 22: zweite Länge
- 24: Abstandserfassungseinrichtung
- 26: elektronische Recheneinrichtung
- 28: Steuereinrichtung
- 30: Ausgabeeinrichtung

## Patentansprüche

1. Verfahren zum Betreiben eines Kraftfahrzeugs (3), bei welchem mittels einer Abstandserfassungseinrichtung (24) eine erste Länge (20) einer ersten Freifläche (16) vor dem Kraftfahrzeug (3) und eine zweite Länge (22) einer zweiten Freifläche (18) hinter dem Kraftfahrzeug (3) ermittelt werden, **dadurch gekennzeichnet, dass** mittels einer elektronischen Recheneinrichtung (26) eine Summe aus der ersten Länge (20) und der zweiten Länge (22) mit einer vorgegebenen Gesamtparklänge verglichen wird und mittels einer Steuereinrichtung (28) in Abhängigkeit von dem Vergleich das Kraftfahrzeug (3) für ein Einstellen der Freiflächen (16, 18) rangiert wird, wobei beim Rangieren des Kraftfahrzeugs (3) die erste Länge (20) oder die zweite Länge (22) auf die vorgegebene Gesamtparklänge eingestellt werden, wenn die erste Länge (20) und/oder die zweite Länge (22) jeweils größer sind als ein für die Freiflächen (16, 18) vorgegebener Grenzwert und die Summe der ersten Länge (20) und der zweiten Länge (22) größer ist als die vorgegebene Gesamtparklänge.

2. Verfahren nach Anspruch 1, wobei beim Rangieren des Kraftfahrzeugs (3) die erste Länge (20) auf die vorgegebene Gesamtparklänge eingestellt wird, wenn die erste Länge (20) kürzer ist als die zweite Länge (22), oder die zweite Länge (22) auf die vorgegebene Gesamtparklänge eingestellt wird, wenn die zweite Länge (22) kürzer ist als die erste Länge (20).

3. Verfahren nach einem der vorhergehenden Ansprüche, wobei beim Rangieren des Kraftfahrzeugs (3) die erste Länge (20) der ersten Freifläche (16) und die zweite Länge (22) der zweiten Freifläche (18) aneinander angeglichen werden, wenn die Summe aus der ersten Länge (20) und der zweiten Länge (22) kleiner oder gleich der vorgegebenen Gesamtparklänge ist.

4. Verfahren nach einem der vorhergehenden Ansprüche, wobei beim Rangieren des Kraftfahrzeugs (3) die erste Länge (20) der ersten Freifläche (16) und die zweite Länge (22) der zweiten Freifläche (18) aneinander angeglichen werden, wenn die Summe aus der ersten Länge (20) und der zweiten Länge (22) größer als die vorgegebene Gesamtparklänge ist und sowohl die erste Länge (20) als auch die zweite Länge (22) jeweils kürzer sind als oder gleich groß sind wie ein für die Freiflächen (16, 18) vorgegebener Grenzwert.

5. Verfahren nach einem der vorhergehenden Ansprüche, wobei das Rangieren des Kraftfahrzeugs (3) mittels der Steuereinrichtung (28) ausgelöst wird, wenn mittels der Abstandserfassungseinrichtung (24) festgestellt wird, dass die ermittelte erste Länge (20) oder die ermittelte zweite Länge (22) kürzer sind als eine für die Freiflächen (16, 18) vorgegebene Mindestlänge.

6. Verfahren nach einem der vorhergehenden Ansprüche, wobei mittels der Steuereinrichtung (28) das Kraftfahrzeug (3) nur innerhalb eines vorgegebenen Toleranzbereichs rangiert wird.

7. Verfahren nach einem der vorhergehenden Ansprüche, wobei mittels der Abstandserfassungseinrichtung (24) die erste Länge (20) der ersten Freifläche (16) vor dem Kraftfahrzeug (3) und die zweite Länge (22) der zweiten Freifläche (18) hinter dem Kraftfahrzeug (3) mehrmals und in regelmäßigen Abständen ermittelt werden.

8. Verfahren nach einem der vorhergehenden Ansprüche, wobei beim Rangieren des Kraftfahrzeugs (3) mittels einer Ausgabeeinrichtung (30) wenigstens ein Warnsignal ausgegeben wird.

9. Kraftfahrzeug (3), welches dazu eingerichtet ist, in einem Verfahren nach einem der vorhergehenden Ansprüche betrieben zu werden, mit einer Abstandserfassungseinrichtung (24), welche dazu eingerichtet ist, eine erste Länge (20) einer ersten Freifläche (16) vor dem Kraftfahrzeug (3) und eine zweite Länge (22) einer zweiten Freifläche (18) hinter dem Kraftfahrzeug (3) zu ermitteln, **dadurch gekennzeichnet, dass** das Kraftfahrzeug eine elektronische Recheneinrichtung (26), welche dazu eingerichtet ist, eine Summe aus der ersten Länge (20) und der zweiten Länge (22) mit einer vorgegebenen Gesamtparklänge zu vergleichen, und eine Steuereinrichtung (28), welche dazu eingerichtet ist, in Abhängigkeit von dem Vergleich das Kraftfahrzeug (3) für ein Einstellen der Freiflächen (16, 18) zu rangieren, aufweist,
wobei die Steuereinrichtung (3) dazu eingerichtet ist, beim Rangieren des Kraftfahrzeugs (3) die erste Länge (20) oder die zweite Länge (22) auf die vorgegebene Gesamtparklänge einzustellen, wenn die erste Länge (20) und/oder die zweite Länge (22) jeweils größer sind als ein für die Freiflächen (16, 18) vorgegebener Grenzwert und die Summe der ersten Länge (20) und der zweiten Länge (22) größer ist als die vorgegebene Gesamtparklänge.

## Claims

1. Method for operating a motor vehicle (3), in which a first length (20) of a first free area (16) in front of the motor vehicle (3) and a second length (22) of a second free area (18) behind the motor vehicle (3) are determined by means of a distance detection device (24), **characterized in that** a sum of the first length (20) and the second length (22) is compared with a predefined total parking length by means of an electronic computing device (26), and, for adjusting the free areas (16, 18), the motor vehicle (3) is maneuvered by means of a control device (28) in dependence on the comparison, the first length (20) or the second length (22) being adjusted to the predefined total parking length during the maneuvering of the motor vehicle (3) if the first length (20) and/or the second length (22) are in each case greater than a limit value predefined for the free areas (16, 18) and the sum of the first length (20) and the second length (22) is greater than the predefined total parking length.

2. Method according to claim 1, wherein, during the maneuvering of the motor vehicle (3), the first length (20) is adjusted to the predefined total parking length if the first length (20) is shorter than the second length (22), or the second length (22) is adjusted to the predefined total parking length if the second length (22) is shorter than the first length (20).

3. Method according to any of the preceding claims, wherein, during maneuvering of the motor vehicle (3), the first length (20) of the first free area (16) and the second length (22) of the second free area (18) are matched to one another if the sum of the first length (20) and the second length (22) is less than or equal to the predefined total parking length.

4. Method according to any of the preceding claims, wherein, during the maneuvering of the motor vehicle (3), the first length (20) of the first free area (16) and the second length (22) of the second free area (18) are matched to one another if the sum of the first length (20) and the second length (22) is greater than the predefined total parking length and both the first length (20) and the second length (22) are each shorter than or equal to a limit value predefined for the free areas (16, 18).

5. Method according to any of the preceding claims, wherein the maneuvering of the motor vehicle (3) is initiated by means of the control device (28) if it is determined by means of the distance detection device (24) that the determined first length (20) or the determined second length (22) are shorter than a minimum length predefined for the free areas (16, 18).

6. Method according to any of the preceding claims, wherein the motor vehicle (3) is maneuvered by means of the control device (28) only within a predefined tolerance range.

7. Method according to any of the preceding claims, wherein the first length (20) of the first free area (16) in front of the motor vehicle (3) and the second length (22) of the second free area (18) behind the motor vehicle (3) are determined several times and at regular intervals by means of the distance detection device (24).

8. Method according to any of the preceding claims, wherein, during maneuvering of the motor vehicle (3), at least one warning signal is output by means of an output device (30).

9. Motor vehicle (3) which is configured to be operated in a method according to any of the preceding claims, comprising a distance detection device (24) which is configured to determine a first length (20) of a first free area (16) in front of the motor vehicle (3) and a second length (22) of a second free area (18) behind the motor vehicle (3), **characterized in that** the motor vehicle comprises an electronic computing device (26) which is configured to compare a sum of the first length (20) and the second length (22) with a predefined total parking length, and a control device (28) which is configured, for adjustment of the free areas (16, 18), to maneuver the motor vehicle (3) in dependence on the comparison, the control device (3) being configured to adjust the first length (20) or the second length (22) to the predefined total parking length during the maneuvering of the motor vehicle (3) if the first length (20) and/or the second length (22) are in each case greater than a limit value predefined for the free areas (16, 18) and the sum of the first length (20) and the second length (22) is greater than the predefined total parking length.

## Revendications

1. Procédé pour faire fonctionner un véhicule automobile (3), dans lequel, au moyen d'un dispositif de détection de distance (24), une première longueur (20) d'un premier espace libre (16) devant le véhicule automobile (3) et une seconde longueur (22) d'un second espace libre (18) derrière le véhicule automobile (3) sont déterminées, **caractérisé en ce que,** au moyen d'un dispositif de calcul électronique (26), une somme de la première longueur (20) et de la seconde longueur (22) est comparée à une longueur de stationnement totale prédéfinie et, au moyen d'un dispositif de commande (28), en fonction de la comparaison, le véhicule automobile (3) est manoeuvré pour un réglage des espaces libres (16, 18), dans lequel lors de la manoeuvre du véhicule automobile (3), la première longueur (20) ou la seconde longueur (22) est réglée sur la longueur de stationnement totale prédéfinie, lorsque la première longueur (20) et/ou la seconde longueur (22) sont respectivement supérieures à une valeur limite prédéfinie pour les espaces libres (16, 18) et la somme de la première longueur (20) et de la seconde longueur (22) est supérieure à la longueur de stationnement totale prédéfinie.

2. Procédé selon la revendication 1, dans lequel lors de la manoeuvre du véhicule automobile (3), la première longueur (20) est réglée sur la longueur de stationnement totale prédéfinie, lorsque la première longueur (20) est inférieure à la seconde longueur (22) ou la seconde longueur (22) est réglée sur la longueur de stationnement totale prédéfinie, lorsque la seconde longueur (22) est inférieure à la première longueur (20).

3. Procédé selon l'une quelconque des revendications précédentes, dans lequel lors de la manoeuvre du véhicule automobile (3), la première longueur (20) du premier espace libre (16) et la seconde longueur (22) du second espace libre (18) sont adaptées l'une à l'autre, lorsque la somme de la première longueur (20) et de la seconde longueur (22) est inférieure ou égale à la longueur de stationnement totale prédéfinie.

4. Procédé selon l'une quelconque des revendications précédentes, dans lequel lors de la manoeuvre du véhicule automobile (3), la première longueur (20) du premier espace libre (16) et la seconde longueur (22) du second espace libre (18) sont adaptées l'une à l'autre, lorsque la somme de la première longueur (20) et de la seconde longueur (22) est supérieure à la longueur de stationnement totale prédéfinie et aussi bien la première longueur (20) que la seconde longueur (22) sont respectivement inférieures ou égales à une valeur limite prédéfinie pour les espaces libres (16, 18).

5. Procédé selon l'une quelconque des revendications précédentes, dans lequel la manoeuvre du véhicule automobile (3) est déclenchée à l'aide du dispositif de commande (28), lorsqu'il est constaté à l'aide du dispositif de détection de distance (24) que la première longueur (20) déterminée ou la seconde longueur (22) déterminée sont inférieures à une longueur minimale prédéfinie pour les espaces libres (16, 18).

6. Procédé selon l'une quelconque des revendications précédentes, dans lequel le véhicule automobile (3) n'est manoeuvré qu'au sein d'une plage de tolérance prédéfinie à l'aide du dispositif de commande (28).

7. Procédé selon l'une quelconque des revendications précédentes, dans lequel la première longueur (20) du premier espace libre (16) devant le véhicule automobile (3) et la seconde longueur (22) du second espace libre (18) derrière le véhicule automobile (3) sont déterminées à l'aide du dispositif de détection de distance (24) plusieurs fois et à des intervalles réguliers.

8. Procédé selon l'une quelconque des revendications précédentes, dans lequel lors de la manoeuvre du véhicule automobile (3), au moins un signal d'avertissement est émis à l'aide d'un dispositif d'émission (30).

9. Véhicule automobile (3), lequel est conçu pour être amené à fonctionner dans un procédé selon l'une quelconque des revendications précédentes, comportant un dispositif de détection de distance (24), lequel est conçu pour déterminer une première longueur (20) d'un premier espace libre (16) devant le véhicule automobile (3) et une seconde longueur (22) d'un second espace libre (18) derrière le véhicule automobile (3), **caractérisé en ce que** le véhicule automobile présente un dispositif de calcul électronique (26), lequel est conçu pour comparer une somme de la première longueur (20) et de la seconde longueur (22) à une longueur de stationnement totale prédéfinie et un dispositif de commande (28), lequel est conçu, en fonction de la comparaison, pour manoeuvrer le véhicule automobile (3) pour un réglage des espaces libres (16, 18), dans lequel le dispositif de commande (3) est conçu, lors de la manoeuvre du véhicule automobile (3), pour régler la première longueur (20) ou la seconde longueur (22) sur la longueur de stationnement totale prédéfinie, lorsque la première longueur (20) et/ou la seconde longueur (22) sont respectivement supérieures à une valeur limite prédéfinie pour les espaces libres (16, 18) et la somme de la première longueur (20) et de la seconde longueur (22) est supérieure à la longueur de stationnement totale prédéfinie.
